# EUROPEAN PATENT SPECIFICATION

(11) **EP 1 531 105 B1**
(45) Date of publication and mention of the grant of the patent: **19.03.2008**
(21) Application number: 04256597.8
(22) Date of filing: 26.10.2004
(51) Int. Cl.: B60T 8/36, B29C 45/00

(54) **Hydraulic unit for an anti-lock brake system and method of manufacturing the same**
Hydraulikaggregrat für eine blockiergeschützte Fahrzeugbremsanlage und Verfahren zur dessen Herstellung
Unité hydraulique pour un système de freinage antiblocage et procédé de sa fabrication

(30) Priority: 12.11.2003 KR 2003079936; 14.11.2003 KR 2003080667; 14.11.2003 KR 2003080668
(43) Date of publication of application: 18.05.2005
(73) Proprietor: Mando Corporation, Pyungtaek-City, Kyungki-Do (KR)
(72) Inventor: Yang, I-Jin, Pyungteak-City, Kyonggi-Do (KR); Ha, Dong-Hun, Pyungteak-City, Kyonggi-Do (KR)
(74) Representative: Pratt, David Martin

(56) References cited:
- EP-A- 0 379 957
- EP-A- 0 539 770
- WO-A-99/44872
- GB-A- 2 178 139
- US-A- 5 281 013
- US-A1- 2002 124 891
- PATENT ABSTRACTS OF JAPAN vol. 016, no. 438 (M-1309), 11 September 1992 (1992-09-11) -& JP 04 151080 A (NISSHINBO IND INC), 25 May 1992 (1992-05-25)

## Description

The present invention relates to a hydraulic unit for an anti-lock brake system for vehicles, and, more particularly, to a hydraulic unit for an anti-lock brake system that is manufactured through injection moulding of a resin material. Also, the present invention relates to a method of manufacturing the same.

An anti-lock brake system mounted in a vehicle is a system that controls braking oil pressure applied to wheel cylinders of wheels of the vehicle such that the braking oil pressure is decreased or increased when the vehicle is braked. The wheel of the vehicle is not fully locked by means of the anti-lock brake system, whereby the vehicle is stopped within the shortest distance possible while the steering performance of the vehicle is maintained. Such an anti-lock brake system further comprises a hydraulic unit that controls braking oil pressure, an electronic control unit that controls the hydraulic unit, and wheel sensors that sense velocities of the respective wheels of the vehicle, in addition to a servomechanism, a master cylinder, and wheel cylinders of a common brake system for vehicles.

The hydraulic unit of the anti-lock brake system decreases, maintains, or increases braking oil pressures applied to the wheels of the vehicle to control the braking force. One example of the hydraulic unit of the anti-lock brake system is disclosed in U.S. Patent Specification No. 5,577,813 wherein the hydraulic unit of the anti-lock brake system comprises a block-type housing having a plurality of flow channels formed therein, a plurality of valves mounted to the housing for opening/closing the flow channels, a pump that pressurises a fluid, and low-pressure and high-pressure accumulators that accumulate the fluid.

To manufacture the conventional hydraulic unit as described above, a metal material, such as aluminum, is cut to obtain a hexahedral housing, and then the housing is also cut to form a plurality of bores and a plurality of inner flow channels in the housing. In the block-type housing manufactured as described above are mounted a plurality of valves, a pump, and low-pressure and high-pressure accumulators. In this way, the hydraulic unit is manufactured.

In the conventional hydraulic unit of the anti-lock brake system, however, the aluminum housing is manufactured through a step of cutting the housing such that the surface of the housing is flat, another cutting step of forming bores, in which a plurality of components are mounted in the housing, and yet another cutting step of forming inner flow channels in the housing. It is necessary that high-accuracy cutting operations be carried out at the respective cutting steps. As a result, the manufacturing process of the housing is very complicated and troublesome. Furthermore, the manufacturing costs of the housing are very high, since the housing is made of aluminum.

Other known hydraulic units are described in WO 99/44872A and EP-A-0539770.

It is an aim of the invention to provide a hydraulic unit for an anti-lock brake system for vehicles having a housing that is easily manufactured such that components are easily and securely mounted to the housing, whereby production efficiency is improved, and thus the manufacturing costs of the housing are reduced.

It is another aim of the invention to provide a method of manufacturing the same.

The present invention provides a hydraulic unit for an anti-lock brake system, the hydraulic unit comprising a housing having components that control braking oil pressure supplied to wheels of a vehicle, such as a plurality of valves, accumulators, and hydraulic pumps, mounted thereto, flow channels formed in the housing, the flow channels being connected between the components, and a plurality of pipes connected to each other in the housing, wherein the housing comprises: an inner housing having bores and flow channels formed therein, the inner housing being made of an injected resin material, the components being inserted in the bores of the inner housing; and an outer housing disposed on the outer surface of the inner housing fixing the components mounted to the inner housing.

Preferably, the inner housing is provided at the outer surface thereof with uneven parts to guarantee secure attachment between the inner housing and the outer housing.

Preferably, a bonding agent is applied to the outer surface of the inner housing to guarantee secure attachment between the inner housing and the outer housing.

Preferably, the components are provided at the outer surfaces thereof with uneven parts to guarantee secure attachment between the components and the outer housing and maintain airtightness and watertightness between the components and the outer housing.

The present invention also provides a method of manufacturing a hydraulic unit of an anti-lock brake system, the hydraulic unit comprising a housing having components that control braking oil pressure supplied to wheels of a vehicle, such as a plurality of valves, accumulators, and hydraulic pumps, mounted thereto, flow channels formed in the housing, the flow channels being connected between the components, and a plurality of pipes connected to each other in the housing, wherein the method comprises: an inner housing forming step of forming an inner housing having a plurality of bores and flow channels formed therein through injection molding of a resin material; a component inserting step of inserting the components in the bores of the inner housing; and an outer housing forming step of forming an outer housing on the outer surface of the inner housing having the components mounted thereto through injection molding of a resin material.

Additional aspects and/or advantages of the invention will be set forth in part in the description which follows and, in part, will be obvious from the description, or may be learned by practice of the invention.

The invention will now be described in greater detail, by way of example, with reference to the drawings, in which:

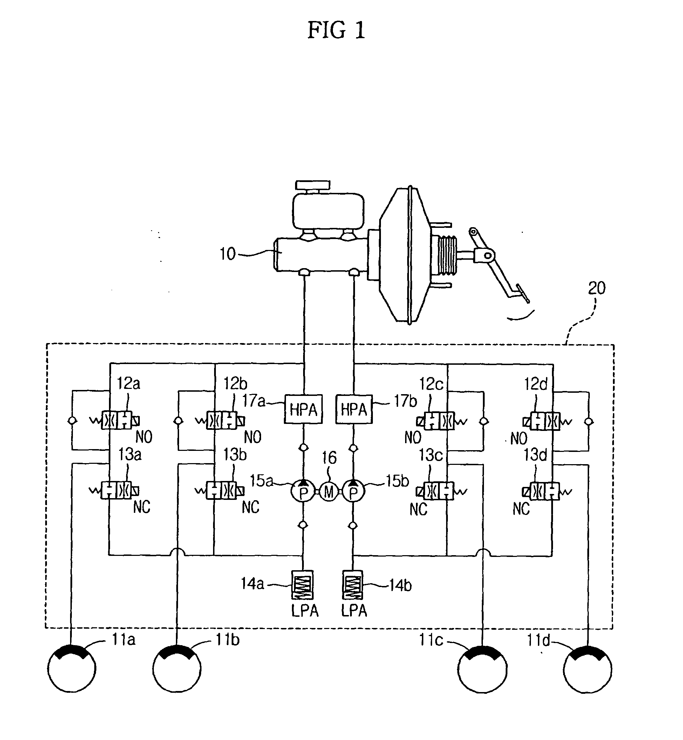

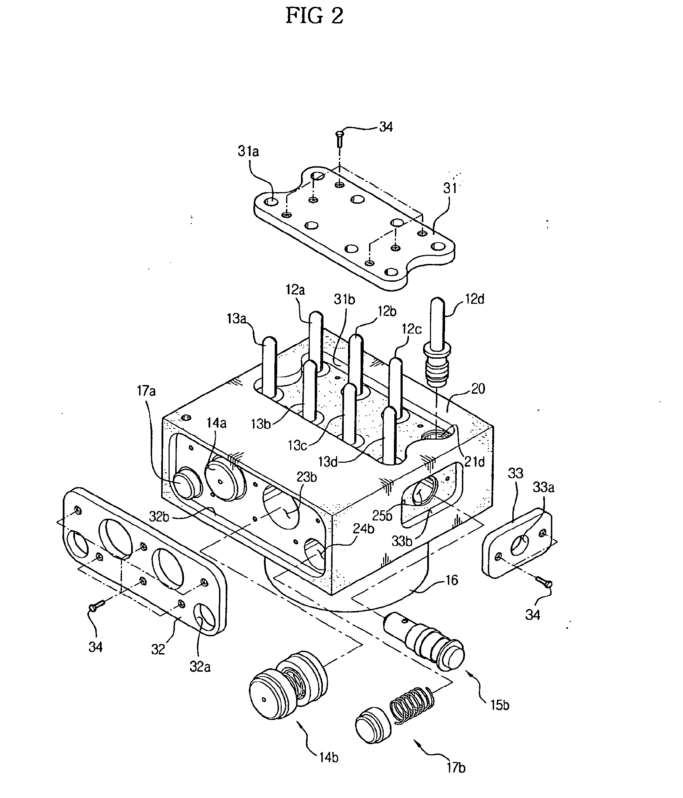

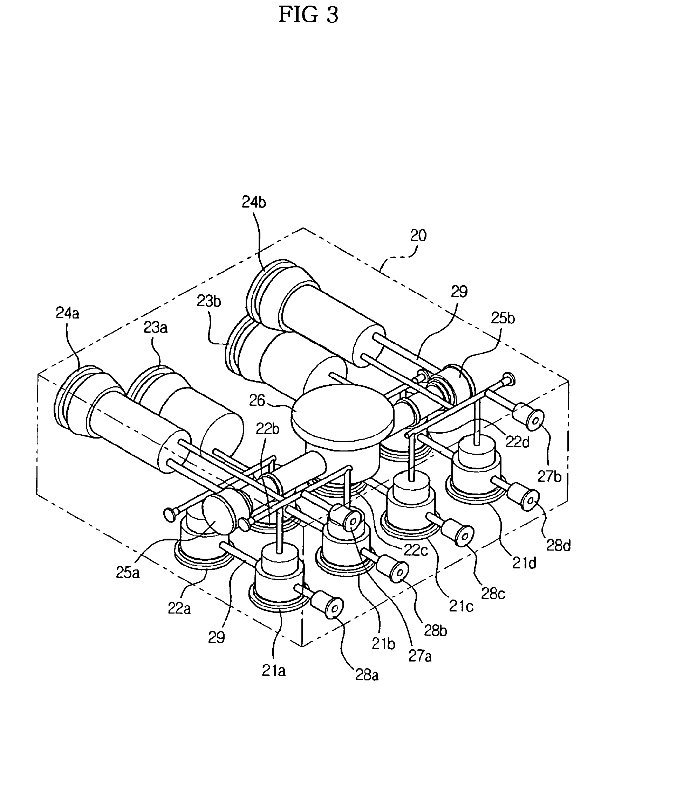

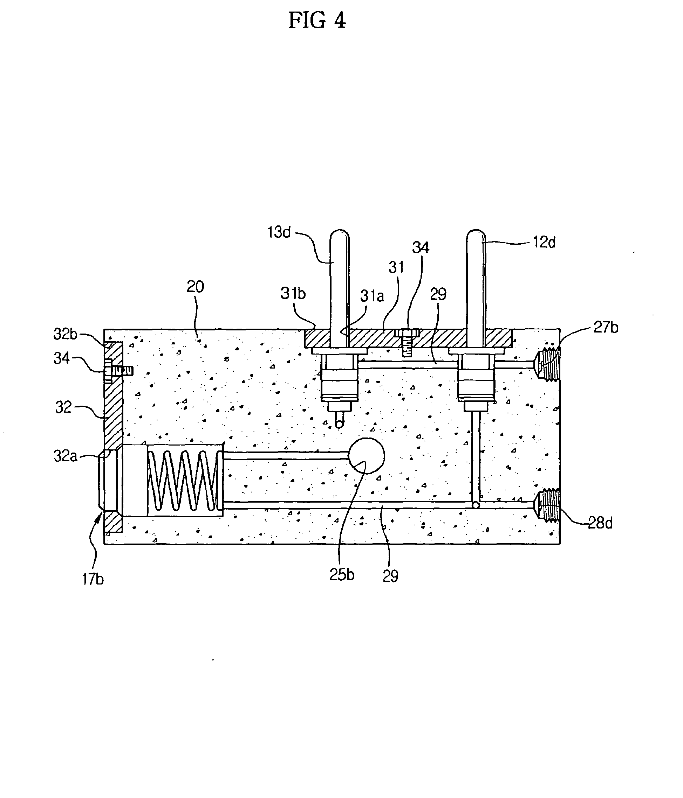

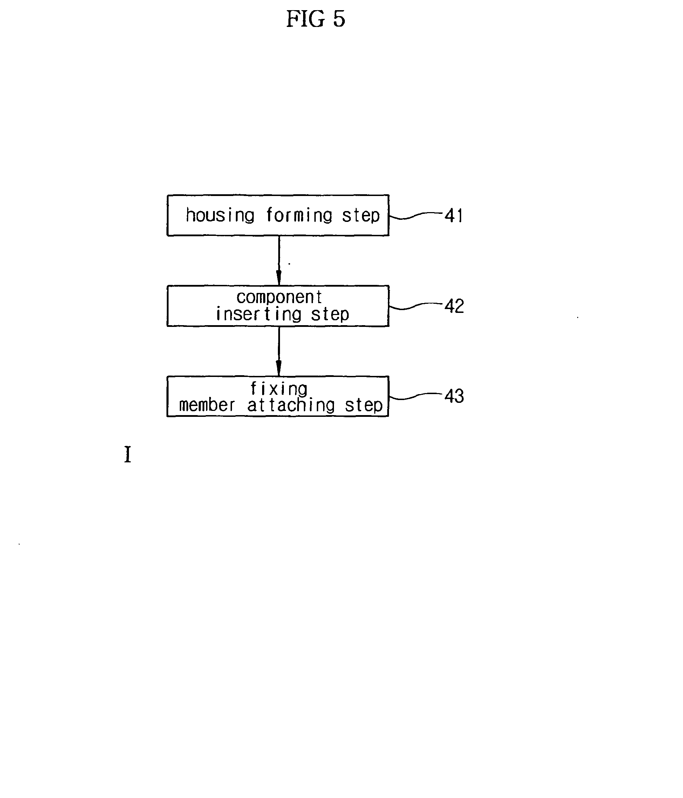

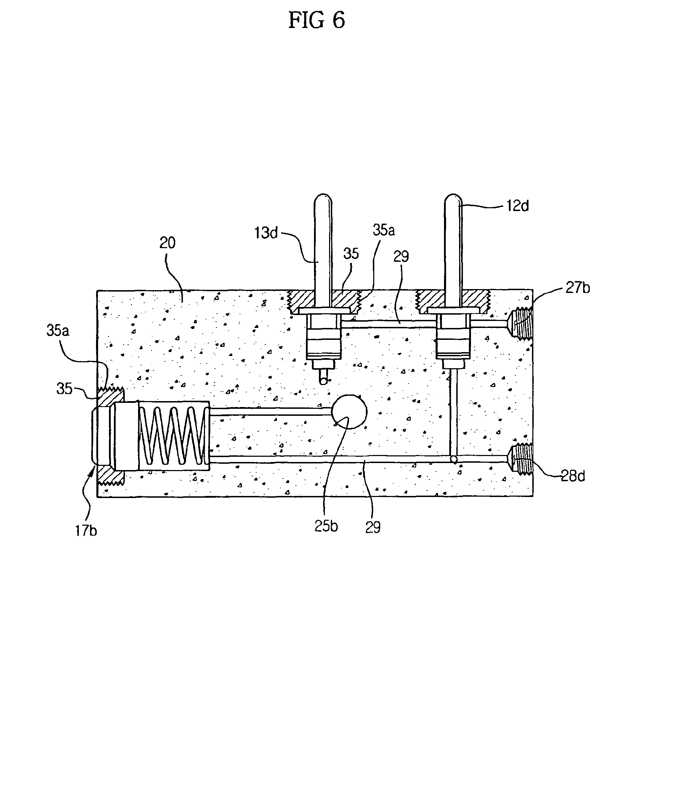

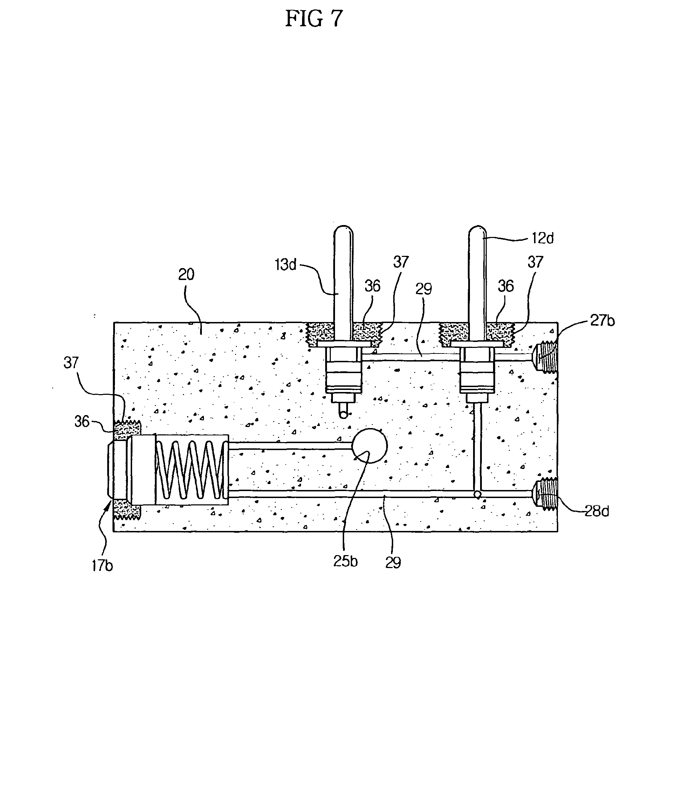

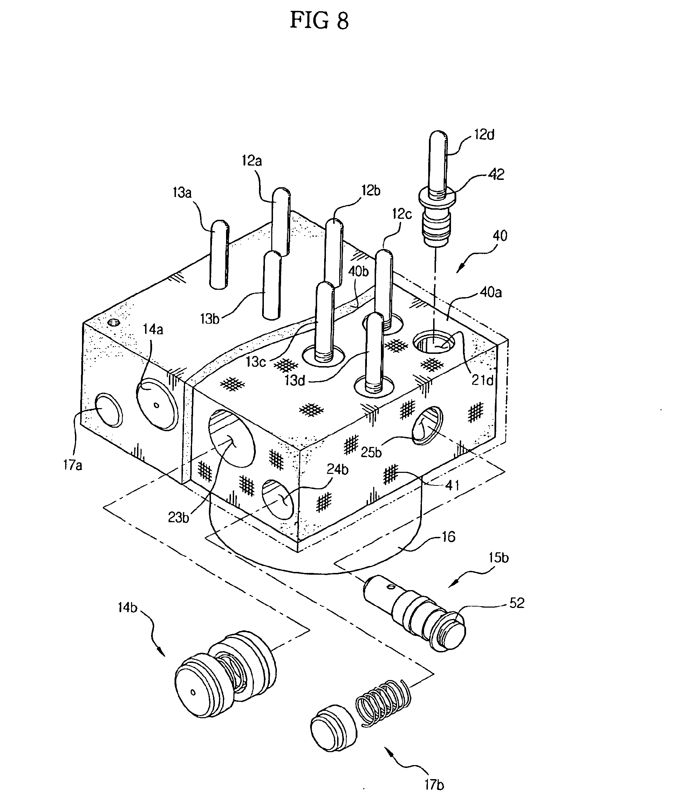

FIG. 1 is a view showing a hydraulic circuit for an anti-lock brake system; FIG. 2 is an exploded perspective view showing the structure of the hydraulic unit of FIG. 1; FIG. 3 is a perspective view showing bores and flow channels formed in a housing of the hydraulic unit of FIG. 1; FIG. 4 is a sectional view showing the structure of the hydraulic unit of the FIG. 1; FIG. 5 is a flow chart illustrating a manufacturing process of the hydraulic unit of FIG. 1; FIG. 6 is a sectional view showing the structure of another form of hydraulic unit for an anti-lock brake system; FIG. 7 is a sectional view showing the structure of the hydraulic unit of FIG. 6; FIG. 8 is an exploded perspective view showing the structure of a hydraulic unit for an anti-lock brake system according to a preferred embodiment of the present invention;
FIG. 9 is a sectional view showing the structure of an inner housing of the hydraulic unit shown in FIG. 8;
FIG. 10 is a sectional view of the inner housing of the hydraulic unit shown in FIG. 8 showing components mounted to the inner housing;
FIG. 11 is a sectional view of the hydraulic unit of FIG. 8 showing an outer housing disposed on the outer surface of the inner housing; and
FIG. 12 is a flow chart illustrating a manufacturing process of the hydraulic unit of FIG. 8.

Reference will now be made in detail to the embodiment of the present invention, examples of which are illustrated in the accompanying drawings, wherein like reference numerals refer to like elements throughout. The embodiment is described below to explain the present invention by referring to the figures.

FIGS. 1 to 5 show a hydraulic unit of an anti-lock brake system and a method of manufacturing the same. As is shown in FIG. 1, the anti-lock brake system comprises: a plurality of valves 12a, 12b, 12c, 12d, 13a, 13b, 13c, and 13d that intermittently control transmission of braking oil pressure created in a master cylinder 10 to wheel cylinders 11a, 11b, 11c, and 11d mounted to front and rear wheels of the vehicle, respectively; and two low-pressure accumulators 14a and 14b that accumulate oil returned from the wheel cylinders 11a, 11b, 11c, and 11d. The anti-lock brake system further comprises: two hydraulic pumps 15a and 15b that pressurize oil accumulated in the low-pressure accumulators 14a and 14b; a motor 16 that operates the hydraulic pumps 15a and 15b; and two high-pressure accumulators 17a and 17b that accumulate oil discharged from the hydraulic pumps 15a and 15b to decrease pressure pulsation.

The plurality of valves in the hydraulic circuit of FIG. 1 comprise: normal open valves 12a, 12b, 12c, and 12d, which are disposed upstream of flow channels connected to the wheel cylinders 11a, 11b, 11c, and 11d of the wheels, respectively, the normal open valves 12a, 12b, 12c, and 12d being normally open; and normal closed valves 13a, 13b, 13c, and 13d, which are disposed downstream of flow channels connected to the wheel cylinders 11a, 11b, 11c, and 11d of the wheels, respectively, the normal closed valves 13a, 13b, 13c, and 13d being normally closed. The two hydraulic pumps 15a and 15b are common piston-type pumps, which are operated by means of the motor 16. The two low-pressure accumulators 14a and 14b are disposed at the flow channels at the inlet sides of the hydraulic pumps 15a and 15b for accumulating oil returned from the normal closed type valves 13a, 13b, 13c, and 13d and supplying the accumulated oil to the inlets of the hydraulic pumps 15a and 15b. The two high-pressure accumulators 17a and 17b are disposed at the flow channels at the outlet sides of the hydraulic pumps 15a and 15b for accumulating oil discharged from the hydraulic pumps 15a and 15b to decrease pressure pulsation caused by the operation of the hydraulic pumps 15a and 15b. The operation of the motor 16, that drives the valves 12a, 12b, 12c, 12d, 13a, 13b, 13c, and 13d, and the hydraulic pumps 15a and 15b, is controlled by means of an electronic control unit (not shown) such that the braking oil pressure transmitted to the wheel cylinders of the wheels are controlled.

In the anti-lock brake system as described above, the plurality of valves 12a, 12b, 12c, 12d, 13a, 13b, 13c, and 13d, low-pressure and high-pressure accumulators 14a, 14b, 17a, and 17b, and hydraulic pumps 15a and 15b are mounted to a hexahedral housing 20, as shown in FIG. 2, to form a hydraulic unit. As is shown in FIG. 3, the housing 20 of the hydraulic unit is provided with bores 21a, 21b, 21c, 21d, 22a, 22b, 22c, and 22d, in which the valves 12a, 12b, 12c, 12d, 13a, 13b, 13c, and 13d are fitted, respectively, bores 23a, 23b, 24a, and 24b, in which the low-pressure and high-pressure accumulators 14a, 14b, 17a, and 17b are fitted, respectively, bores 25a, 25b, and 26, in which the hydraulic pumps 15a and 15b, and the motor 16 that drives the hydraulic pumps 15a and 15b are fitted, respectively, and a plurality of pipe-connecting parts 27a, 27b, 28a, 28b, 28c, and 28d. In the housing 20 is formed a plurality of flow channels 29 connected between the components mounted to the housing 20 and the pipe-connecting parts. In this way, the hydraulic unit as is shown in FIG. 1 is accomplished.

The housing 20 of the hydraulic unit according to the present invention is manufactured through injection molding of a resin material. Consequently, the housing 20 is easily manufactured. Specifically, the housing 20 is formed while the plurality of bores and flow channels 29 are formed in the housing 20 through injection molding of a resin material. Also, the components inserted in the bores of the housing 20 are fixedly mounted to the housing 20 by means of fixing members 31, 32, and 33 attached to the housing 20, as is shown in FIG. 2.

As is shown in FIGS. 2 and 4, the fixing members 31, 32, and 33 are made of a metal plate having predetermined strength and thickness. The fixing members 31, 32, and 33 are securely attached to the housing 20 by means of a plurality of fixing screws 34. Also, the fixing members 31, 32, and 33 are provided with through-holes 31a, 32a, and 33a, which correspond to the components, respectively. As a result, the components are partially exposed through the through-holes 31a, 32a, and 33a when the fixing members 31, 32, and 33 are attached to the housing 20. Specifically, the fixing members 31, 32, and 33 are attached to the housing 20 while the components are inserted in the through-holes 31a, 32a, and 33a of the fixing members 31, 32, and 33. Consequently, the components are fixedly mounted to the housing 20. The housing 20 is provided at the positions where the fixing members 31, 32, and 33 are attached to the housing 20 with depressions 31b, 32b, and 33b, in which the fixing members 31, 32, and 33 are located, respectively, such that the outer surfaces of the fixing members 31, 32, and 33 and the outer surface of the housing 20 are placed on the same plane when the fixing members 31, 32, and 33 are attached to the housing 20.

Some of the fixing members, i.e., the fixing members 31 and 32, are made of a plate having a large area such that a plurality of components are simultaneously mounted to the housing when the plurality of components are attached to the same surface of the housing 20 as in the plurality of valves 12a, 12b, 12c, 12d, 13a, 13b, 13c, and 13d. The through-holes 31a and 32a are formed, in large number, through the fixing members 31 and 32 such that the components are inserted in the through-holes 31a and 32a. Consequently, the plurality of components are simultaneously mounted to the housing 20 by attaching the fixing members 31 and 32 to the housing 20.

A method of manufacturing this hydraulic unit will now be described.

As is shown in FIG. 5, the method of manufacturing the hydraulic unit comprises: a housing forming step S41 of forming a housing 20 having a plurality of bores and flow channels 29 formed therein; a component inserting step S42 of inserting components in the bores of the housing 20; and a fixing member attaching step S43 of attaching fixing members 31, 32, and 33 to the housing 20 having the components mounted thereto to fix the components.

At the housing forming step S41, molten resin is injected into a mould (not shown) used to form the housing 20. At this time, the plurality of bores of the housing 20 are formed by means of a plurality of cores (not shown) disposed in the mould. The flow channels 29 in the housing 20 are formed by means of flow channel forming pins (not shown) disposed in the mould. Consequently, the plurality of bores and the flow channels are simultaneously formed in the course of forming the housing through injection moulding.

After the forming of the housing 20 is completed, the component inserting step S42 is carried out to insert the previously prepared components, such as the plurality of valves, the hydraulic pumps, and the low-pressure and high-pressure accumulators, in the bores of the housing 20, respectively.

After the insertion of the components in the corresponding bores of the housing 20 is completed, the fixing members 31, 32, and 33 are attached to the housing 20 having the components mounted thereto to fix the components. At this time, the fixing members 31, 32, and 33 are attached to the housing 20 by means of fixing screws 34.

FIG. 6 shows another hydraulic unit. This unitis different from that previously described in that the fixing members 35 used to fix the components are formed in the shape of a cylinder such that the fixing members 35 can be fitted in the bores of the housing 20 by screw engagement, i.e., the components are separately mounted to the housing 20 by means of the respective fixing members 35. In this case, thread parts 35a are formed at the inner surfaces of the bores of the housing 20 and the outer surfaces of the fixing members 35. The components mounted to the housing 20 are securely fixed by means of the thread engagement between the fixing members 35 and the bores of the housing 20.

FIG. 7 shows another hydraulic unit. This unitis different from those previously described in that the components are inserted in the bores of the housing manufactured through injection moulding, and then a bonding agent 36, which is made of an epoxy-based resin material, is filled in the bores of the housing 20 to fix the components to the housing 20. In thiscase, uneven parts 37 are formed at the inner surfaces of the inlets of the bores of the housing 20 such that the bonding agent 36 can be securely attached to the inner surfaces of the bores. In thiscase, it is not necessary to form the respective bores of the housing with high dimensional accuracy, since the components are fixed to the housing by filling the bonding agent in the bores of the housing 20. Consequently, time and costs of processing and assembling the components are reduced.

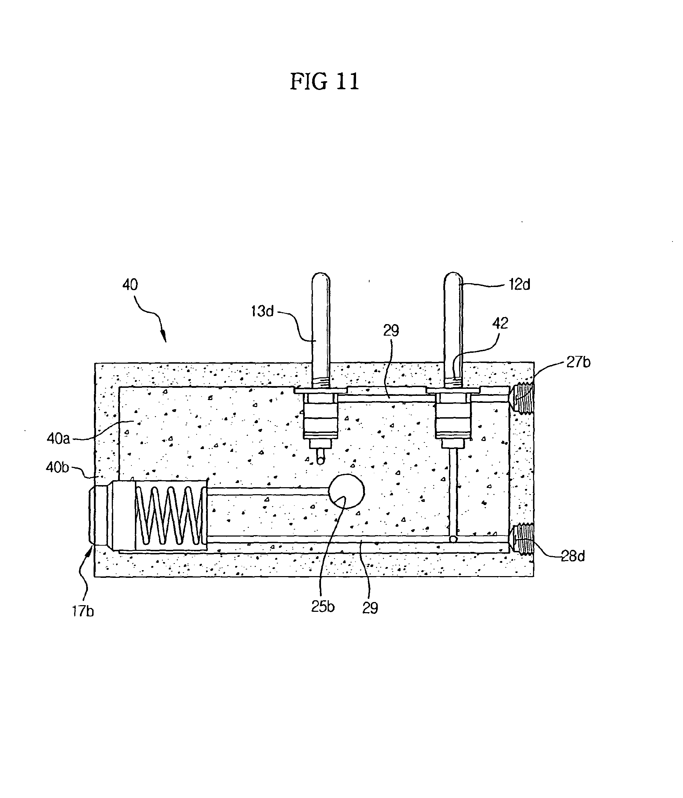

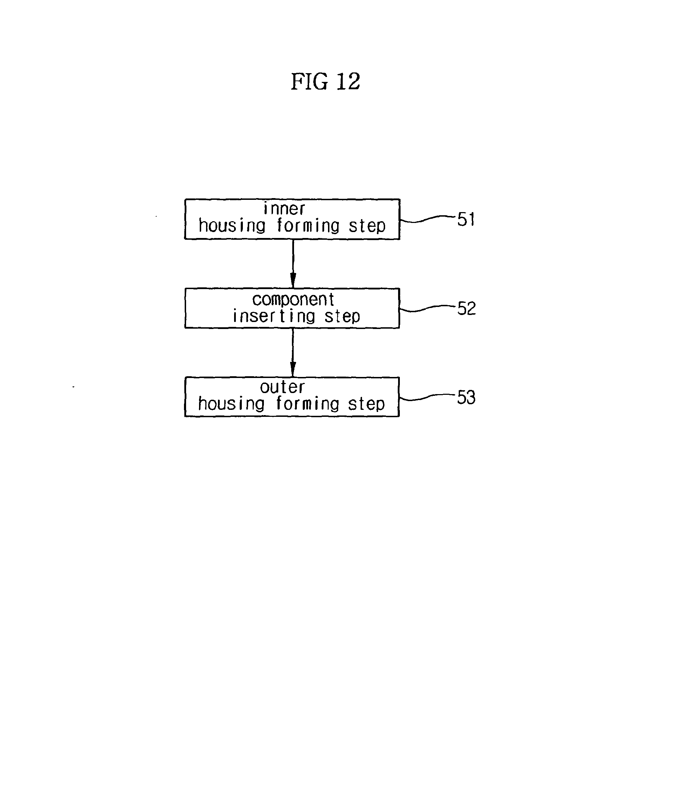

FIGS. 8 to 12 show a hydraulic unit of an anti-lock brake system and a method of manufacturing the same according to a preferred embodiment of the present invention. As is shown in FIG. 11 and 12, a housing 40 of the hydraulic unit is manufactured through an inner housing forming step S51 of forming an inner housing 40a having a plurality of bores and flow channels formed therein; a component inserting step S52 of inserting components in the bores of the inner housing 40a; and an outer housing forming step S53 of forming an outer housing 40b on the outer surface of the inner housing 40a by injection molding of a resin material to fix the components. The manufacturing method according to the present invention will be described below in detail.

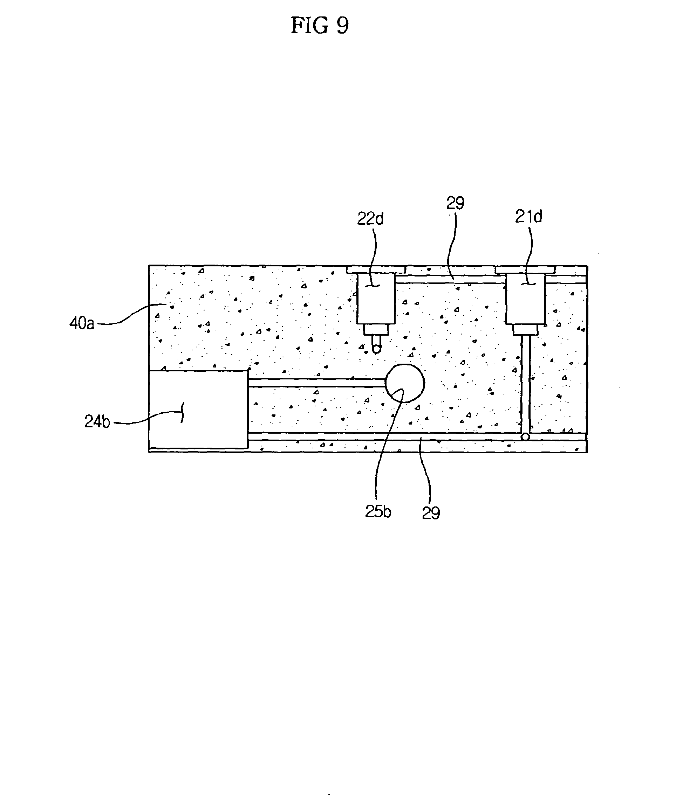

At the inner housing forming step S51, molten resin is injected into a mold (not shown) used to form the inner housing 40a, as is shown in FIGS. 8 and 9. At this time, the plurality of bores of the inner housing 40a are formed by means of a plurality of cores (not shown) disposed in the mold. The flow channels 29 in the housing 20 are formed by means of flow channel forming pins (not shown) disposed in the mold. Consequently, the plurality of bores and the flow channels are simultaneously formed in the course of forming the inner housing 40a through injection molding. Also, the inner housing 40a is provided at the outer surface thereof with uneven parts 41, as is shown in FIG. 8, by which the outer housing 40b is securely attached to the inner housing 40a when the outer housing 40b is formed on the outer surface of the inner housing 40a.

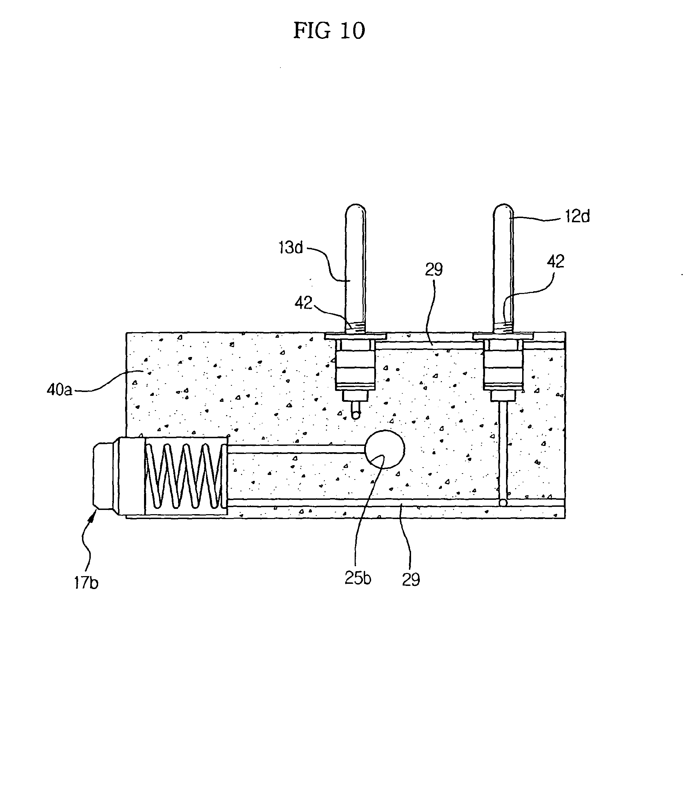

After the forming of the inner housing 40a is completed, the component inserting step S52 is carried out to insert the previously prepared components, such as the plurality of valves, the hydraulic pumps, and the low-pressure and high-pressure accumulators, in the bores of the inner housing 40a, respectively, as is shown in FIG. 10.

After the insertion of the components in the corresponding bores of the inner housing 40a is completed, the inner housing 40a having the components mounted thereto is placed in a mold (not shown) used to form the outer housing 40b, and then a resin material is injected into the mold to form the outer housing 40b. In this way, the outer housing forming step S53 is carried out. As a result, the outer housing 40b is disposed on the inner housing 40a while the components mounted to the inner housing 40a are fixed by means of the outer housing 40b, by which the connections between the components and the inner housing are closed, and thus airtightness and watertightness between components and the inner housing are maintained. Also, the uneven parts 41 are formed on the outer surface of the inner housing 40a to guarantee secure attachment between the inner housing 40a and the outer housing 40b. Furthermore, uneven parts 42 are preferably formed on the outer surfaces of the components before forming the outer housing 40b to guarantee more secure attachment between the components and the outer housing 40b. Preferably, the uneven parts 42 are formed in the shape of grooves and protrusions formed along the circumferences of the components.

If the outer housing 40b is formed of the same resin material as the inner housing 40a, and a bonding agent is applied to the outer surface of the inner housing 40a before the outer housing 40b is formed at the outer housing forming step S53, the outer housing 40b is more securely attached to the inner housing 40a.

As apparent from the above description, the present invention provides a hydraulic unit of an anti-lock brake system for vehicles having a housing that is easily manufactured through injection molding of a resin material. Consequently, the present invention has the effect that the housing is easily manufactured with increased productivity as compared with the conventional method of manufacturing the housing through an aluminum cutting process. In addition, the manufacturing costs of the housing are reduced.

According to the present invention, the housing comprises an inner housing and an outer housing. After the inner housing is formed, the components are mounted to the inner housing, and then the outer housing is formed on the inner housing. Consequently, the housing is easily formed, and the components are securely mounted to the housing while airtightness and watertightness between the components and the housing are maintained.

Although embodiments of the present invention have been shown and described, it would be appreciated by those skilled in the art that changes may be made in this embodiment without departing from the principles of the invention, the scope of which is defined in the claims.

## Claims

1. A hydraulic unit for an anti-lock brake system, the hydraulic unit comprising a housing (40) having components that control braking oil pressure supplied to wheels of a vehicle, such as a plurality of valves (12a, 12b, 12c, 12d, 13a, 13b, 13c, 13d), accumulators (14a, 14b, 17a, 17b), and hydraulic pumps (15a, 15b), mounted thereto, flow channels (29) formed in the housing, the flow channels being connected between the components, and a plurality of pipes connected to each other in the housing, wherein
the housing comprises: an inner housing (40a) having bores (21a, 21b, 21c, 21d, 22a, 22b, 22c, 22d, 23a, 23b, 24a, 24b, 25a, 25b, 26) and the flow channels formed therein, the inner housing being made of an injected resin material, the components being inserted in the bores of the inner housing; and an outer housing (40b) disposed on the outer surface of the inner housing fixing the components mounted to the inner housing.

2. A unit according to claim 1, wherein the inner housing (40a) is provided at the outer surface thereof with uneven parts (41) to guarantee secure attachment between the inner housing and the outer housing (40b).

3. A unit according to claim 1 or claim 2, wherein a bonding agent is applied to the outer surface of the inner housing (40a) to guarantee secure attachment between the inner housing and the outer housing.

4. A unit according to any one of claims 1 to 3, wherein the components are provided at the outer surfaces thereof with uneven parts to guarantee secure attachment between the components and the outer housing (40b) and maintain airtightness and watertightness between the components and the outer housing.

5. A method of manufacturing a hydraulic unit of an anti-lock brake system, the hydraulic unit comprising a housing (40) having components that control braking oil pressure supplied to wheels of a vehicle, such as a plurality of valves (12a, 12b, 12c, 12d, 13a, 13b, 13c, 13d), accumulators (14a, 14b, 17a, 17b), and hydraulic pumps (15a, 15b), mounted thereto, flow channels (29) formed in the housing, the flow channels being connected between the components, and a plurality of pipes connected to each other in the housing, wherein the method comprises:
an inner housing forming step of forming an inner housing (40a) having a plurality of bores (21a, 21b, 21c, 21d, 22a, 22b, 22c, 22d, 23a, 23b, 24a, 24b, 25a, 25b, 26) and the flow channels formed therein through injection moulding of a resin material;
a component inserting step of inserting the components in the bores of the inner housing; and
an outer housing forming step of forming an outer housing (40b) on the outer surface of the inner housing having the components mounted thereto through injection moulding of a resin material.

6. A method according to claim 5, wherein the inner housing forming step is carried out such that the inner housing (40a) is provided at the outer surface thereof with uneven parts (41).

7. A method according to claim 5 or claim 6, wherein the outer housing forming step comprises the sub-step of applying a bonding agent to the outer surface of the inner housing (40a) before the outer housing (40b) is formed through injection moulding.

8. A method according to any one of claims 5 to 7, wherein the outer housing (40b) is formed of the same resin material as the inner housing (40a).

## Patentansprüche

1. Hydraulikeinheit für ein Antiblockierbremssystem, umfassend ein Gehäuse (40) mit Komponenten, die den Bremsöldruck, der den Rädern eines Fahrzeuges zugeführt wird, steuern, wie eine Vielzahl von daran angebrachten Ventilen (12 a, 12 b, 12 c, 12 d, 13 a, 13 b, 13 c, 13 d), Druckspeichern (14 a, 14 b, 17 a, 17 b) und Hydraulikpumpen (15 a, 15 b), Strömungskanäle (29), die im Gehäuse ausgebildet sind, wobei die Strömungskanäle zwischen den Komponenten konnektiert sind, sowie eine Anzahl von Rohrleitungen, die im Gehäuse miteinander verbunden sind, wobei das Gehäuse umfasst:
ein Innengehäuse (40 a) mit Bohrungen (21 a, 21 b, 21 c, 21 d, 22 a, 22 b, 22 c, 22 d, 23 a, 23 b, 24 a, 24 b, 25 a, 25 b, 26) und den darin ausgebildeten Strömungskanälen, wobei das Innengehäuse aus einem gespritzten Harzmaterial geformt ist und die Komponenten in die Bohrungen im Innengehäuse eingesetzt sind, und ein Außengehäuse (40 b), das auf der Außenseite des Innengehäuses angeordnet ist und die am Innengehäuse angebrachten Komponenten fixiert.

2. Einheit nach Anspruch 1, bei der das Innengehäuse (40 a) mit einer Außenfläche versehen ist mit unebenen Bereichen (41), um den sicheren Halt zwischen dem Innen- und dem Außengehäuse zu garantieren.

3. Einheit nach Anspruch 1 oder 2, bei der ein Haftmittel auf die Außenseite des Innengehäuses (40 a) aufgebracht ist, um den sicheren Halt zwischen dem Innen- und dem Außengehäuse zu garantieren.

4. Einheit nach einem der Ansprüche 1 bis 3, bei der die Komponenten an den Außenseiten davon angeordnet sind, mit unebenen Teilen, um den sicheren Halt zwischen den Komponenten und dem Außengehäuse (40 b) zu garantieren und um die Luft- und die Wasserdichtigkeit aufrecht zu erhalten.

5. Verfahren zur Herstellung einer Hydraulikeinheit für ein Antiblockiersystem, umfassend ein Gehäuse (40) mit Komponenten, die den Bremsöldruck, der den Rädern eines Fahrzeugs zugeführt wird, steuern, wie eine Vielzahl von daran angebrachten Ventilen (12 a, 12 b, 12 c, 12 d, 13 a, 13 b, 13 c, 13 d), Druckspeichern (14 a, 14 b, 17 a, 17 b) und Hydraulikpumpen (15 a, 15 b), Strömungskanäle (29), die in dem Gehäuse ausgebildet sind, wobei die Strömungskanäle zwischen den Komponenten konnektiert sind, sowie eine Anzahl von Rohrleitungen, die im Gehäuse miteinander verbunden sind, wobei das Verfahren umfasst:
- einen Innengehäuseformungsschritt zur Formung eines Innengehäuses (40) mit einer Vielzahl von Bohrungen (21 a, 21 b, 21 c, 21 d, 22 a, 22 b, 22 c, 22 d, 23 a, 23 b, 24 a, 24 b, 25 a, 25 b, 26) und den darin ausgebildeten Strömungskanälen durch Spritzgießen eines Harzmaterials,
- einen Komponenteneinsatzschritt zum Einsetzen der Komponenten in die Bohrungen des Innengehäuses, und
- einen Außengehäuseformungsschritt zur Formung eines Außengehäuses (40 b) auf der Außenseite des daran angebrachten Innengehäuses mit den Komponenten durch Spritzgießen eines Harzmaterials.

6. Verfahren nach Anspruch 5, bei dem der Innengehäuseformungsschritt so ausgeführt wird, dass das Innengehäuse (40 a) an der Außenfläche mit unebenen Bereichen (41) versehen wird.

7. Verfahren nach Anspruch 5 oder 6, bei dem der Außengehäuseformungsschritt den Unterschritt des Aufbringens eines Haftmittels auf die Außenseite des Innengehäuses (40 a) umfasst, bevor das Außengehäuse durch Spritzgießen geformt wird.

8. Verfahren nach einem der Ansprüche 5 bis 7, bei dem das Außengehäuse (40 b) aus demselben Harzmaterial geformt wird wie das Innengehäuse.

## Revendications

1. Unité hydraulique pour un système de freinage antiblocage, l'unité hydraulique comprenant un logement (40) ayant des composants qui régulent la pression de liquide de freinage alimentant les roues d'un véhicule, tels qu'une pluralité de valves (12a, 12b, 12c, 12d, 13a, 13b, 13c, 13d), des accumulateurs (14a, 14b, 17c, 17b) et des pompes hydrauliques (15a, 15b) qui s'y trouvent montés, des canaux d'écoulement (29) formés dans le logement, les canaux d'écoulement étant connectés entre les composants, et une pluralité de tubulures connectées les unes aux autres dans le logement, dans lequel:
le logement comprend : un logement intérieur (40a) ayant des alésages (21a, 21b, 21c, 21d, 22a, 22b, 22c, 22d, 23a, 23b, 24a, 24b, 25a, 25b, 26) et les canaux d'écoulement formés à l'intérieur, le logement intérieur étant réalisé en matériau de résine injectée, les composants étant insérés dans les alésages du logement intérieur ; et un logement extérieur (40a) disposé à la surface extérieure du logement intérieur fixant les composants montés sur le logement intérieur.

2. Unité selon la revendication 1, dans laquelle le logement (40a) est disposé à la surface extérieure dudit avec des parties irrégulières (41) pour garantir la bonne fixation entre le logement intérieur et le logement extérieur (40b).

3. Unité selon la revendication 1 ou la revendication 2, dans laquelle un agent de liaison est appliqué à la surface extérieure du logement intérieur (40a) pour garantir la bonne fixation entre le logement intérieur et le logement extérieur.

4. Unité selon l'une des revendications 1 à 3, dans laquelle les composants sont disposés sur les surfaces extérieures de ladite unité avec des parties irrégulières pour garantir la bonne fixation entre les composants et le logement extérieur (40b) et maintenir l'étanchéité à l'air et l'étanchéité à l'eau entre les composants et le logement extérieur.

5. Procédé de fabrication d'une unité hydraulique d'un système de freinage antiblocage, l'unité hydraulique comprenant un logement (40) ayant des composants qui régulent la pression de liquide de freinage alimentant les roues d'un véhicule, tels qu'une pluralité de valves (12a, 12b, 12c, 12d, 13a, 13b, 13c, 13d), des accumulateurs (14a, 14b, 17a, 17b) et des pompes hydrauliques (15a, 15b) qui s'y trouvent montés, des canaux d'écoulement (29) formés dans le logement, les canaux d'écoulement étant connectés entre les composants, et une pluralité de tubulures connectées les unes aux autres dans le logement, dans lequel le procédé comprend :
une étape de fabrication de logement intérieur consistant à former un logement intérieur (40a) ayant une pluralité d'alésages (21a, 21b, 21c, 21d, 22a, 22b, 22c, 22d, 23a, 23b, 24a, 24b, 25a, 25b, 26) et les canaux d'écoulement formés à l'intérieur par moulage par injection d'un matériau de résine ;
une étape d'insertion de composant consistant à insérer les composants dans les alésages du logement intérieur ; et
une étape de formation de logement extérieur consistant à former un logement extérieur (40b) sur la surface extérieure du logement intérieur en ayant les composants qui y sont montés par moulage par injection d'un matériau de résine.

6. Procédé selon la revendication 5 dans lequel l'étape de formation de logement intérieur est exécutée de telle façon que le logement intérieur (40a) est disposé à la surface extérieure dudit logement avec des parties irrégulières (41).

7. Procédé selon la revendication 5 ou la revendication 6, dans lequel l'étape de formation du logement extérieur comprend la sous-étape consistant à appliquer un agent de liaison sur la surface extérieure du logement intérieur (40a) avant que le logement extérieur (40b) soit formé par moulage par injection.

8. Procédé selon l'une des revendications 5 à 7, dans lequel le logement extérieur (40b) est formé du même matériau de résine que le logement intérieur (40a).
